# EUROPÄISCHE PATENTSCHRIFT

(11) **EP 2 453 302 B1**
(45) Veröffentlichungstag und Bekanntmachung des Hinweises auf die Patenterteilung: **15.06.2016**
(21) Anmeldenummer: 11188704.8
(22) Anmeldetag: 10.11.2011
(51) Int. Cl.: G02F 1/1337, G02F 1/1343

(54) **Flüssigkristallanzeige**
Liquid crystal display
Affichage à cristaux liquides

(30) Priorität: 11.11.2010 DE 102010043751; 04.02.2011 DE 102011003639
(43) Veröffentlichungstag der Anmeldung: 16.05.2012
(73) Patentinhaber: AEG Gesellschaft für moderne Informationssysteme mbH, 89077 Ulm (DE)
(72) Erfinder: Bayrle, Dr. Reiner, 89129 Langenau (DE); Simon, Dr. Arnold, 89231 Neu-Ulm (DE); Bader, Otto, 88447 Warthausen (DE)
(74) Vertreter: Winter, Brandl, Fürniss, Hübner, Röss, Kaiser, Polte - Partnerschaft mbB

(56) Entgegenhaltungen:
- EP-A1- 0 240 010
- EP-A1- 0 636 917
- EP-A2- 0 564 263
- EP-A2- 0 788 014
- GB-A- 2 332 770
- US-A- 4 712 877
- US-A1- 2004 165 135
- US-B1- 6 342 939

## Beschreibung

Die Erfindung bezieht sich auf eine Flüssigkristallanzeige (auch Flüssigkristallanzeigeeinheit oder Flüssigkristallanzeigeeinrichtung genannt), die eine Graustufendarstellung ermöglicht. Insbesondere bezieht sich die Erfindung auf eine Flüssigkristallanzeige, die mit cholesterischen Flüssigkristallen, ChLCD, arbeitet.

Aus der US 6,016,133 ist eine Flüssigkristallanzeige bekannt; die mit ferroelektrischem Flüssigkristallmaterial arbeitet. Das ferroelektrische Flüssigkristallmaterial enthält Körner mit einem Durchmesser von 400 nm und fein verteilte Domänen mit unterschiedlichen Schwellenspannungen. Das an eine Datenelektrode angelegte Datensignal wird hinsichtlich seiner Impulsspannung und/oder seiner Impulsbreite in Abhängigkeit von der Graustufendarstellung moduliert.

Aus der US 4,712,877 A ist eine Flüssigkristallanzeige mit einem Flüssigkristallmaterial zwischen zwei Polymerschichten und mit mehreren Elektroden bekannt. Die Graustufendarstellung erfolgt durch eine Dickenvariation der Flüssigkristallschicht im Bereich der Elektroden.

Aus der EP 0 788 014 A2 und der GB2 332 770 A sind ebenfalls Flüssigkristallanzeigen mit einem Flüssigkristallmaterial zwischen zwei Polymerschichten und mit mehreren Elektroden bekannt. Die Graustufendarstellung erfolgt durch eine Variation des elektrischen Widerstandswertes der Pixelelektrode erfolgt; die Dicken der Polymerschichten werden nicht verändert.

Die vorliegende Erfindung zielt auf eine vereinfachte Graustufendarstellung bei Flüssigkristallanzeigen mit extrem steiler Spannungskennlinie ab, die insbesondere mit cholesterischen Flüssigkristallmaterial versehen sind.

Hierzu wird eine Flüssigkristallanzeige gemäß dem Patentanspruch 1 bereitgestellt. Vorteilhafte Ausgestaltungen der Erfindung sind in den Unteransprüchen angegeben.

Des Weiteren wird ein Verfahren zur Herstellung einer Flüssigkristallzelle, insbesondere für eine Flüssigkristallanzeige, beschrieben, bei dem mehrere Elektroden und mindestens eine Schicht zur Ausrichtung eines Flüssigkristallmaterials bereitgestellt werden und die Oberflächenenergie der Schicht im Bereich einer oder mehrerer der Elektroden lokal verändert wird. Die Polymerschicht kann im Bereich oberhalb einer Pixelelektrode verändert werden, beispielsweise keilförmig oder stufenförmig. Zur elektrischen Kontaktierung jeweiliger Pixel kann eine niederohmige Zuleitung und für mindestens einige der Pixel eine höherohmige Pixelelektrode ausgebildet werden.

Gemäß einem Aspekt der Erfindung wird die Spannungskennlinie bei cholesterischen LCDs, also mit cholesterischem Flüssigkristallmaterial arbeitenden Flüssigkristallanzeigeeinrichtungen, modifiziert, wobei sich die jeweiligen Pixel, d.h. die Anzeigeelemente oder Bildpunkte, auf mikroskopischer Ebene aus mehreren Subpixeln zusammensetzen, die jeweils unterschiedliche Kennlinien aufweisen. Diese Modifikation ist vorteilhafterweise groß genug gewählt, um die Steilheit der Kennlinie ausreichend abzuflachen, jedoch zugleich auch ausreichend klein, so dass bei der Multiplexansteuerung keine unerwünschten Einschränkungen hinsichtlich der Multiplexrate entstehen. Bei ausreichender Kleinheit der Subpixel ist keine Zuordnung der Struktur zu den einzelnen Pixeln erforderlich, da die mittleren statistischen Abweichungen nur sehr klein sein können.

Gemäß Ausführungsbeispielen der Erfindung sind mehrere Ansätze zur Modifikation der Subpixel realisierbar. Es kann beispielsweise eine Modulation der Oberflächenbeschaffenheit und der Oberflächenenergie vorgesehen sein, so dass unterschiedliche Kennlinien erzielt werden können.

Diese Gestaltung lässt sich durch unterschiedliche Verfahren umsetzen. Beispielsweise können Glasätzprozesse eingesetzt werden, oder es kann eine Strukturierung der Oberflächeneigenschaften durch Belichtung erzielt werden. Es können auch Dünnfilmtechnologien eingesetzt werden, z.B. LB-Filme (LB = Langmuir-Blodgett), etc. eingesetzt werden.

Zur Ausbildung der optional als Polymerschicht ausgebildeten Schicht kann ein Verfahren eingesetzt werden, bei dem ein zweifacher oder mehrfacher Druckprozess zum Auftragen des Schichtmaterials, z.B. Polyimid durchgeführt wird. Hierdurch lassen sich eine gewünschte Schichtdicke, ein gewünschter, z.B. stufiger oder keilförmiger Verlauf, und gewünschte Eigenschaften der Schicht zuverlässig und rasch einstellen.

Ausführungsbeispiele der Erfindung bieten eine Verbesserung der Graustufenfähigkeit von Flüssigkristallanzeigen, insbesondere cholesterischen Anzeigen, ohne dass eine Beifügung von Nanopartikeln oder dergleichen zur lokalen Änderung einer Dielektrizitätskonstante erforderlich ist. Vorzugsweise werden bei Ausführungsbeispielen der Erfindung nur die Oberflächeneigenschaften und/oder die Zuleitungswiderstände geändert.

Die Erfindung wird nachstehend anhand von Ausführungsbeispielen unter Bezugnahme auf die Zeichnungen näher beschrieben. Es zeigen:
Fig. 1 eine schematische Schnittansicht eines Ausführungsbeispiels einer erfindungsgemäßen Flüssigkristallanzeige,
Figuren 3 bis 7 unterschiedliche Kennlinien,
Fig. 8a, 8b weitere Ausführungsbeispiele einer erfindungsgemäßen Flüssigkristallanzeige, und
Fig. 9a, 9b andere Ausführungsbeispiele einer erfindungsgemäßen Flüssigkristallanzeige.

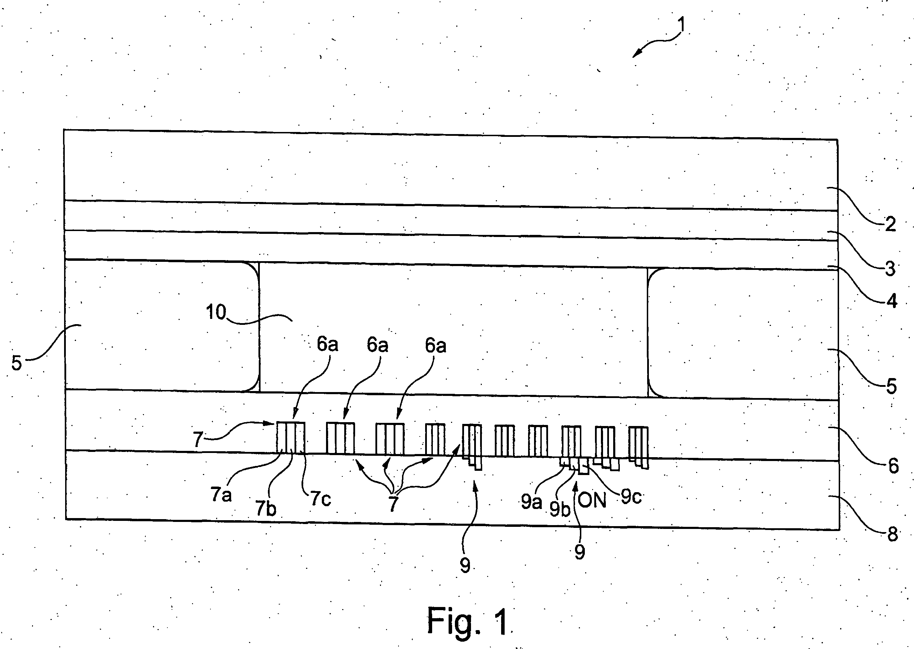

In Fig. 1 ist eine schematische Schnittansicht eines Ausführungsbeispiels, einer erfindungsgemäßen Flüssigkristallanzeige 1 dargestellt. Die Flüssigkristallanzeige 1 weist an ihrer Oberseite ein Trägersubstrat 2, z.B. aus Glas oder Kunststoff, auf, das zusammen mit einem an der Unterseite angeordneten Trägersubstrat 8, das beispielsweise ebenfalls aus Glas oder Kunststoff bestehen kann, die erforderliche mechanische Stabilität der Flüssigkristallzelle gewährleistet. An der Unterseite des Trägersubstrats 2 ist eine Elektrodenschicht 3 angeordnet, die die Zeilen- oder Spaltenelektroden bildet und als Abtastelektroden oder Datenelektroden fungieren kann. Eine unterhalb der Elektrodenschicht 3 angeordnete Schicht 4 dient zur Ausrichtung des Flüssigkristalls und kann aus Polymermaterial, beispielsweise aus Polyimid, bestehen. Die Schicht 4 kann z.B. mittels eines zweifachen oder mehrfachen Druckprozesses gebildet werden, bei dem das Schichtmaterial sukzessiv aufgedruckt wird. Die Schicht 4 kann eine Oberflächentextur aufweisen, die zum Beispiel durch Reiben in einer Richtung gebildet ist und eine Ausrichtung der Flüssigkristallmoleküle bewirkt. Im Inneren der in Fig. 1 gezeigten Flüssigkristallzelle ist ein Flüssigkristall 10 eingeschlossen, der durch seitliche Dichtungen 5 begrenzt ist und zwischen der Schicht 4 und einer Schicht 6 gefangen ist. Die Schicht 6 kann ebenso wie die Schicht 4 aus Polymer, z.B. Polyimid oder anderem geeigneten Material bestehen und eine Ausrichtung der Flüssigkristallmoleküle bewirken.

An den Trägersubstraten 2, 8 können Polarisatoren und Analysatoren in bekannter Weise angeordnet sein.

Wie aus Fig. 1 ersichtlich ist, sind Elektroden 7 in oder an der Schicht 6 angeordnet. Die Elektroden 7 verlaufen rechtwinklig zu den Elektroden der Elektrodenschicht 3, wobei an den Kreuzungspunkten die jeweiligen Pixel der Flüssigkristallanzeige 1 gebildet sind. Die Elektroden 7 verlaufen, ebenso wie die Elektroden der Elektrodenschicht 3, über die gesamte Länge bzw. Breite der Flüssigkristallanzeige oder zumindest über denjenigen Bereich, in dem das Flüssigkristallmaterial 10 vorhanden ist.

Die einzelnen Elektroden 7 können, ebenso wie die nicht im einzelnen gezeigten einzelnen Elektroden der Elektrodenschicht 3, aus einer einzigen Elektrode, oder aber, wie in Fig. 1 gezeigt, aus mehreren Teilelektroden 7a, 7b, 7c zusammengesetzt sein. Die Teilelektroden 7a, 7b, 7c können gemeinsam, oder selektiv, je nach gewünschter Graustufendarstellung des darzustellenden Pixels, angesteuert werden. Die Bereiche der Schicht 6 zwischen den jeweiligen Elektroden 7 und dem Flüssigkristallabschnitt sind lokal mit 6a bezeichnet und können gemäß einem oder mehreren Ausführungsbeispielen hinsichtlich ihrer Oberflächenenergie modifiziert werden.

In Fig. 1 sind schematisch die elektrischen Zuleitungen 9 zu den einzelnen Elektroden 7 dargestellt. Diese Zuleitungen 9 können aus unterschiedlichen Abschnitten 9a, 9b, 9c zusammengesetzt sein, die sich, vorzugsweise isolierend, berühren können und unterschiedliche Widerstandswerte aufweisen. Dies kann beispielsweise, wie gezeigt, durch unterschiedliche Leitungsdicke erreicht werden.

Die in Fig. 1 gezeigten Einzelheiten der Gestaltung der Elektroden 7 und der Zuleitungen 9 sind vorzugsweise auch bei den Elektroden und Zuleitungen der Elektrodenschicht 3 vorgesehen, dort aber aufgrund der rechtwinkligen Orientierungslage nicht erkennbar.

Bei der Graustufendarstellung mit cholesterischen Flüssigkristallanzeigen, ChLCD, gilt bezüglich der Spannungskennlinien von Aufhellung und Abdunkelung allgemein, dass die Aufhellungskennlinie extrem steil ist, so dass geringfügige Spannungsänderungen zu erheblichen Helligkeitsunterschieden führen können. Dabei wirkt das elektrische Feld auf den Flüssigkristall. Feldunterschiede können durch Spannungsunterschiede oder auch durch Zellgapschwankungen hervorgerufen werden, wobei mit Zellgap hier der Abstand zwischen einzelnen Pixeln bezeichnet ist. Rein rechnerisch wäre für das Erreichen von 16 Graustufen in der Aufhellungskennlinie eine Zellgapkonstanz von ca. 10 bis 20 nm erforderlich. Daher ist eine solche Standardmethode zur Generierung von Graustufen nicht geeignet.

Betrachtet man die relative Spannungsempfindlichkeit bzw. die Ableitung dieser Kurve (Graustufensteilheit), so unterscheiden sich Aufhellung und Abdunkelung in der Steigung um den Faktor 3 bis 4 im Peak.

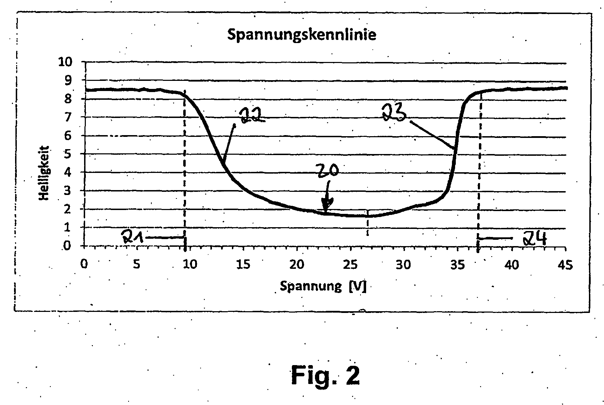

Zur Veranschaulichung dieses Sachverhalts ist in Fig. 2 eine Spannungskennlinie 20 für eine cholesterische LCD-Anzeige dargestellt. Die Spannungskennlinie 20 umfasst eine abfallende Kennlinie 22 und eine ansteigende Kennlinie 23, wobei die Kennlinie den Übergang von selektierender Spannung VSEL zu nicht-selektierender Spannung VNSEL entspricht. Wie vorstehend bereits ausgeführt, ist die Steigung bei der Aufhellung und Abdunklung deutlich unterschiedlich.

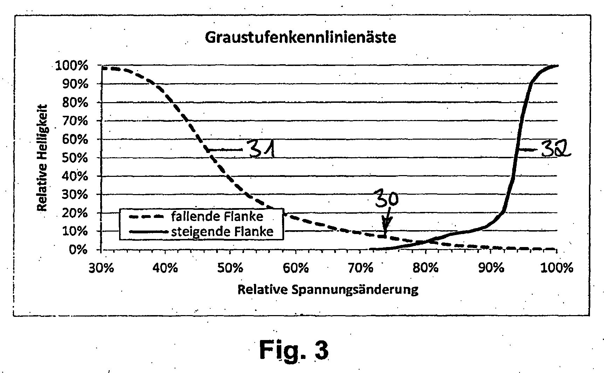

Fig. 3 zeigt einen Ausschnitt der Spannungskennlinie, hier mit dem Bezugszeichen 30 bezeichnet, skaliert auf die maximale Spannung. Auf der Ordinate ist die Helligkeit (in Prozent) aufgetragen, während die relative Spannungsänderung auf der Abszisse aufgetragen ist. Die Spannungskennlinie 30 weist Graustufenkennlinienäste auf, nämlich eine Abdunkelungskennlinie 31 und eine Aufhellungskennlinie 32. Die Abdunkelungskennlinie 31 wird bei Ausführungsbeispielen der vorliegenden Erfindung erzielt und stellt ein neuartiges Charakteristikum dar.

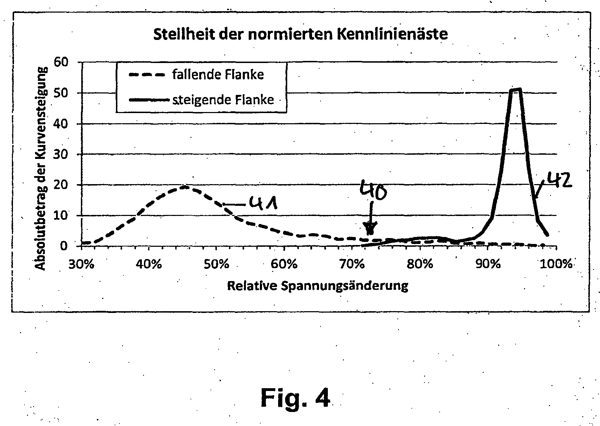

Fig. 4 veranschaulicht eine Graustufenkennliniensteilheit, wobei auf der Ordinate die Steigung, und auf der Abszisse die relative Spannungsänderung aufgetragen ist Die in Fig. 4 gezeigte Steilheitskurve 40 umfasst eine Abdunkelungskennlinie 41, die sich bei erfindungsgemäßen Ausführungsbeispielen einstellt; und eine Aufhellungskennlinie 42, die bei bisherigen Verfahren erzielbar ist. Fig. 4 bildet hierbei die Steigung der in Fig. 3 gezeigten Spannungskennlinien ab.

Eine Zielsetzung vorliegender Erfindung besteht darin, die Steilheit der Spannungskennlinie in einem gewissen Ausmaß, z.B. um einen Faktor von größer 2 oder genauer etwa um den Faktor 4 zu reduzieren, sodass beide Ansteuermethoden (altes und neues Verfahren) äquivalent werden.

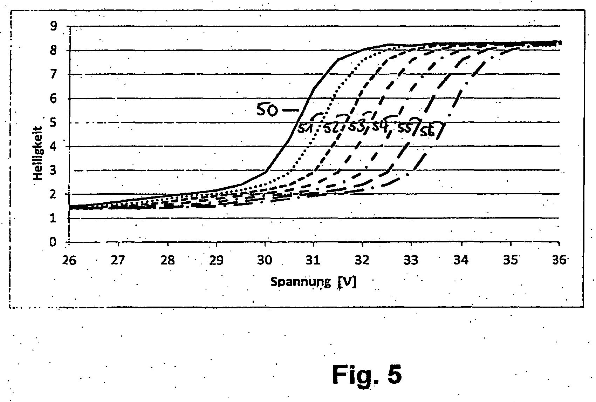

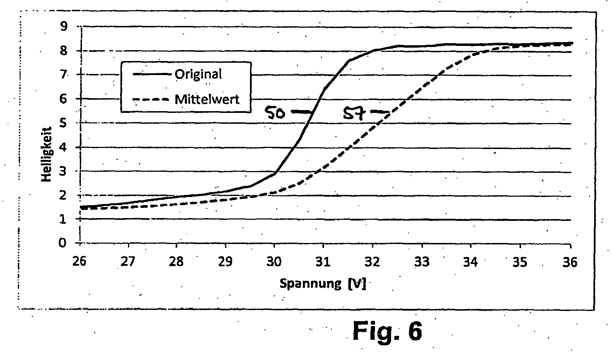

In den Figuren 5 und 6 sind die Ergebnisse von Untersuchungen der Überlagerung von gleichartigen Kennlinien mit sich geringfügig unterscheidenden Schwellenspannungen dargestellt.

In Fig. 5 ist eine Originalkennlinie (Spannungskennlinie) 50 mit verschobenen Kennlinien 51 bis 56 dargestellt, wobei die Schwellenspannungen jeweils um +0,5 V zunehmen, d.h. die Kennlinien 51 bis 56 jeweils um 0,5 V gegenüber der links benachbarten Kennlinie verschoben sind.

In Fig. 6 sind die Originalkennlinie 50 aus Fig. 5 sowie eine Kennlinie 57 dargestellt, die sich als Mittelwert aus allen Kennlinien 50 bis 56 ergibt. Ersichtlich verläuft die Mittelwert-Kennlinie 57 deutlich flacher als jede der Kennlinien 50 bis 56.

Diese Kennlinien 50 bis 56 sind vorzugsweise in unterschiedlichen räumlichen Bereichen statistisch beliebig verteilt. Diese Bereiche haben eine Größe, die wesentlich kleiner ist als das jeweilige Pixel, aber dennoch größer als die typische Domänengröße. Eine Berechnung ergibt, dass bei einer Überlagerung von Kennlinien mit einem Offset (Spannungsversatz) bis zu 3 V eine Abflachung der Kennlinie um den Faktor 3,2 möglich ist. Dabei ändern sich die charakteristischen Kenndaten der Zelle gemäß der folgenden Tabelle, die Maximal- bzw. Minimalspannungen aus der Kennlinie wiedergibt:

| | U3 max. (3%) | U4 min. (97%) | U4 min.-U3 max. | Max. Δ V (97%) |
|---|---|---|---|---|
| Konventionell | 25,50 V | 30,25 V | 4,75 V | 6,75 V |
| Ausführungsbeispiel | 26,75 V | 32,25 V | 5,50 V | 6,40 V |

Es ergibt sich somit hohe Ansteuerungssicherheit und auch großer dynamischer Aussteuerungsbereich, mit sehr hoher Schreibgeschwindigkeit. Durch die angegebenen Maßnahmen lässt sich zudem die Graustufeneinschreibzeit deutlich reduzieren, d.h. hohe Schreibgeschwindigkeit und Bildfrequenz erzielen. Im Vergleich zu einem konventionellen Abdunkelungsverfahren zur Erzielung einer Graustufenansteuerung ist die Einschreibzeit (Graustufeneinschreibzeit) deutlich niedriger.

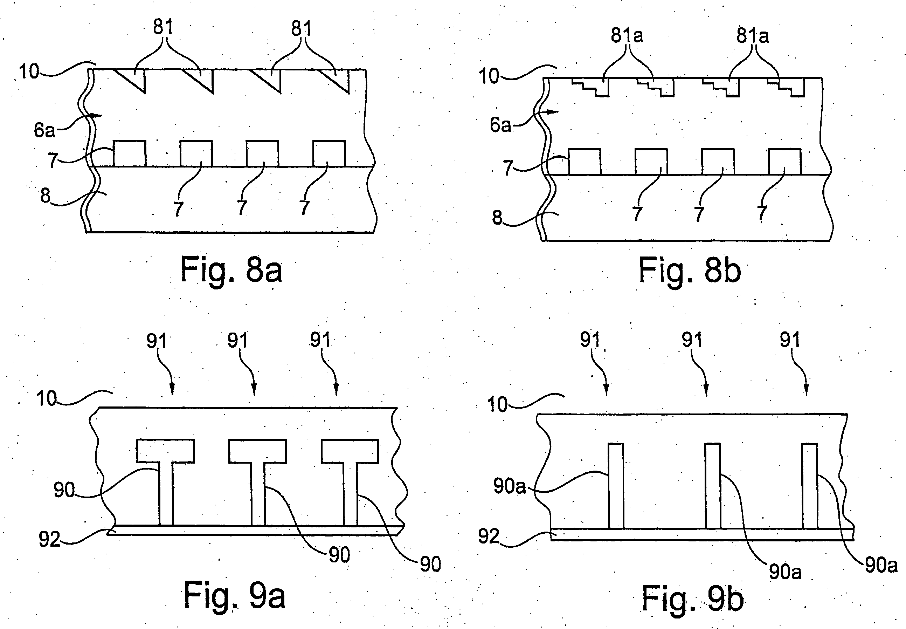

In Fig. 8a, 8b sind Ausführungsbeispiele dargestellt, bei dem eine Veränderung der Oberflächenenergie erzielt wird.

In Versuchen wurden LCD-Zellen aus cholesterischem Flüssigkristallmaterial mit unterschiedlicher Polymer-Konzentration, insbesondere PI-Konzentration (PI = Polyimid) aufgebaut. Die Versuche belegen, dass es möglich ist, den Kennlinienverlauf durch unterschiedliche PI-Konzentration und/oder unterschiedliche PI-Dicke zu modifizieren. Alternativ kann auch die Polyimid-Schichtdicke oder allgemein die Polymer-Schichtdicke unter Beibehaltung gleicher Konzentration modifiziert werden.

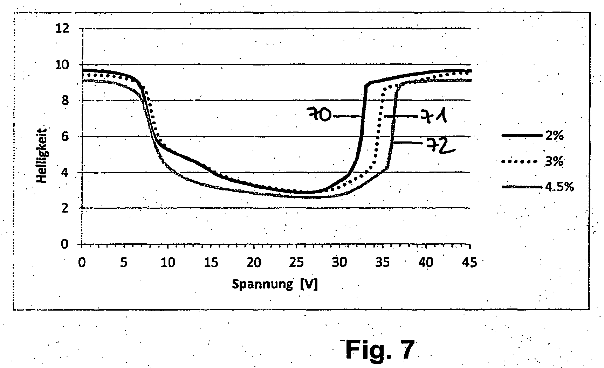

In Fig. 7 sind Spannungskennlinien für unterschiedliche PI-Dicken dargestellt.

In dem Diagramm gemäß Fig. 7 ist auf der Ordinate die Helligkeit, d.h. die LichtTransmission aufgetragen, während auf der Abszisse die Spannung aufgetragen ist. Es sind drei Spannungskennlinien 70, 71, 72 dargestellt, wobei insbesondere die Aufhellungskennlinienäste deutliche Verschiebungen von mehr als 2 V erkennen lassen. Die Spannungskennlinie 70 entspricht einer PI-Dicke, die z.B. mit einer Konzentration von 2 % entsprechend 25 nm erzeugt wurde, während die Spannungskennlinie 71 bei einer PI-Konzentration von 3 % erhalten wurde, die zu einer PI-Dicke von ca. 30 bis 35 nm führte. Die Spannungskennlinie 72 wurde bei einer PI-Dicke von ca. 45 bis 50 nm gemessen, die durch eine PI-Konzentration von 4,5 % erhalten wurde. Die Spannungskennlinien wurden bei einer Gesamt-Dicke von 5 µm erhalten.

Durch Überlagerung der Kennlinien 70, 71, 72 lässt sich also eine deutliche Abflachung und damit eine verbesserte Graustufendarstellung erzielen. In Fig. 8 ist ein Abschnitt eines Ausführungsbeispiels einer erfindungsgemäßen Kristallzelle oder einer erfindungsgemäßen Flüssigkristallanzeige dargestellt, dessen Aufbau weitgehend dem in Fig. 1 gezeigten und vorstehend beschriebenen Ausführungsbeispiel entspricht. Bezüglich nicht dargestellter Teile der Flüssigkristallanzeige wird somit ergänzend auf die vorstehenden Erläuterungen zur Fig. 1 verwiesen. Die Elektroden 7 sind ohne Unterteilung mit etwa rechteckförmigem Querschnitt ausgebildet, können aber auch aus mehreren Subelektroden 7a, 7b, 7c bestehen, wie dies in Fig. 1 gezeigt ist. Bei den Ausführungsbeispielen gemäß Fig. 8a, 8b wird die Veränderung der Oberflächenenergie dadurch erreicht, dass in der beispielsweise aus Polyimid bestehenden oder allgemein als Polymerschicht ausgebildeten Schicht 6, und speziell in den Bereichen 6a direkt oberhalb der Elektroden 7 eine Veränderung 81 der Oberflächenenergie, z.B. durch Veränderung insbesondere der Polyimid- oder Polymer-Konzentration bei der Schichtfertigung, oder durch Änderung der Schichtdicke der Schicht 6 vorgesehen ist. Die Dicken-Änderung 81 kann, wie in Fig. 8a gezeigt, keilförmig verlaufen, so dass sich im Wesentlichen ein sägezahnförmiger Verlauf, gesehen entlang der Flüssigkristallzelle quer zur Längsrichtung der Elektroden 7, also von links nach rechts gemäß Fig. 8a, ergibt. Die Veränderung 81 kann nicht nur durch eine Konzentrationsveränderung erreicht werden, sondern allgemein als Dickenveränderung der Schicht 6 in der dargestellten Form ausgebildet sein, z.B. durch einen zwei- oder mehrfachen Druckprozess.

In Fig. 8b ist anstelle eines keilförmigen Verlaufs der Schichtdicke gemäß Fig. 8a ein stufiger Verlauf mit zwei, drei oder mehr Stufen 81 a der Schichtdicke je Pixel vorgesehen. Die Stufen können durch Einsatz eines zwei- oder mehrstufigen Druckprozesses ausgebildet werden, wobei selektiv Material aufgetragen wird, um die Stufen 81 a zu formen.

Die keilförmigen Einbuchtungen 81 oder die Stufen 81a können mit anderem Material aufgefüllt werden, um eine glatte Oberfläche zu gewährleisten.

Bei einem abgeänderten Ausführungsbeispiel ist es auch möglich, eine Oberflächenveränderung durch sequenziellen PI-Abtrag zu erreichen, beispielsweise durch Einsatz von Plasmaätzen, um die in Fig. 8a oder 8b gezeigte Profilierung zu erzielen. Zusätzlich oder alternativ ist es auch möglich, eine sehr schwache, mechanische Strukturierung vorzusehen, die zu unterschiedlichen PI-Dicken führt. Ferner ist es auch möglich, unterschiedliche Oberflächenenergien durch UV-Belichtung zu realisieren.

Vorteilhafterweise können die Verfahren und Methoden zur zuverlässigen Konditionierung der Oberfläche, beispielsweise in den vorstehend dargelegten Beispielen, auf mikroskopischer Basis evaluiert und verifiziert werden, um die gewünschte Profilierung zu bestätigen.

Bei weiteren, in Fig. 9a, 9b dargestellten Ausführungsbeispielen ist eine Veränderung des Pixelwiderstands zur Verbesserung der Graustufendarstellung vorgesehen. Eine lokale Variation des Widerstands im Pixel, d.h. dem durch die Überkreuzung der Elektroden 7, 3 gebildeten Bereiche, kann ebenfalls zur Verschiebung der Kennlinie ausgenutzt werden. Das System setzt bei diesem Ausführungsbeispiel vorzugsweise zwei unterschiedlich leitfähige Materialien ein, nämlich ein niederohmiges Material für die Zuleitung bis zum Pixel, und ein hochohmiges Material für die komplette Pixelelektrode. Der Spannungsabfall über das hochohmige Material führt zur Verschiebung der Kennlinie innerhalb eines Pixels, sodass sich gute Graustufendarstellung erreichen lässt.

Bei den in Fig. 9a, 9b dargestellten Ausführungsbeispielen ist eine Draufsicht auf Pixelelektroden 90, 90 a gezeigt ist. Mit 91 sind die jeweiligen Pixel schematisch veranschaulicht. Die Pixelelektroden 90, 90a sind optional, wie in Fig. 9a gezeigt, pilzförmig oder balkenförmig, wie in Fig. 9b gezeigt, oder in anderer Weise bis nah an das Flüssigkristallmaterial 10 herangeführt und in Spalten- oder Zeilenrichtüng angeordnet. Eine Zuleitungselektrode 92 dient als Spalten- oder Zeilenelektrode, die die Mehrzahl von Pixelelektroden 90, 90a speist, und besteht aus niederohmigem Material, z.B. Metall, so dass eine im Wesentlichen verlustfreie Spannungsversorgung der Pixelelektroden 90, 90a gewährleistet ist. Die Pixelelektroden 90, 90a selbst bestehen jedoch aus höherohmigem Material, dessen elektrischer Widerstand deutlich höher ist als der der Zuleitungselektrode 92 und beispielsweise das zweifache bis 20-fache, oder fünf- bis zehnfache dieses Werts betragen kann. Das Material der Pixelelektroden 90, 90a kann z.B. ITO (Indium-Zinn-Oxid) sein. Durch den höheren elektrischen Widerstand der Pixelelektrode 90, 90a tritt innerhalb der Pixelelektrode. 90, 90a ein gradueller Spannungsabfall auf, der die Spannungskennlinien innerhalb der einzelnen Pixelelektrodenbereiche verschiebt und damit insgesamt zu einer Abschwächung der insgesamt resultierenden Kennlinie mit verbesserter Graustufendarstellung führt.

Die Ausführungsbeispiele gemäß Fig. 9a, 9b lassen sich auch bei dem Ausführungsbeispiel gemäß Fig. 1 einsetzen, optional auch alternativ zu oder gemeinsam mit den Ausführungsbeispielen gemäß Fig. 8a, 8b. Die Pixelelektrode. 90 entspricht in diesem Fall der Elektrode 7, während das Pixel 91 dem Bereich 6a sowie dem zugehörigen Flüssigkristallbereich und dem entsprechenden Abschnitt der gegenüberliegenden Elektrode 3 entspricht. Die Zuleitungselektrode 92 verläuft in diesem Fall entlang der Grenzlinie zu den Schichten 6, 8 und kontaktiert die einzelnen Elektroden 7 selektiv, um hierdurch eine selektive, im Wesentlichen verlustfreie Aktivierung der Zeilen- oder Spaltenelektroden bzw. Abtast- und Datenelektroden zu erreichen.

Die vorstehend beschriebenen, einzelnen Maßnahmen und Merkmale lassen sich bei Ausführungsbeispielen der Erfindung jeweils einzeln für sich, oder aber auch in beliebiger Kombination von zwei oder mehr Merkmalen, realisieren, wodurch jeweils eigenständige Ausführungsbeispiele gebildet werden.

Anstelle cholesterischer Flüssigkristalle kann auch nematisches oder ferroelektrisches Flüssigkristallmaterial eingesetzt werden. Weiterhin können verdrillt nematische Zellen (TN-Zellen) realisiert werden.

Im Rahmen der Erfindung liegen auch entsprechende Herstellungsverfahren und Ansteuerungsverfahren, wie sie sich aus der vorstehenden Erläuterung erschließen.

Die vorliegende Erfindung ist nicht auf die beschriebenen und gezeigten Ausführungsbeispiele beschränkt.

## Patentansprüche

1. Flüssigkristallanzeige, mit einem Flüssigkristallmaterial (10), das zwischen zwei Polymerschichten (4, 6) angeordnet ist, und mehreren Elektroden (7, 7a, 7b, 7c),
**dadurch gekennzeichnet,**
**dass** die Schichtdicke wenigstens einer der Polymerschichten (4, 6) im Bereich zwischen 25 nm und 50 nm liegt,
**dass** zur Graustufendarstellung die Schichtdicke der wenigstens einen Polymerschicht (4, 6) im Bereich einer oder mehrerer Elektroden unterschiedlich zu derjenigen angrenzender Oberflächenbereiche ausgelegt ist,
**dass** die Dicke der wenigstens einen Polymerschicht (4, 6) zwischen einer als Pixelelektrode dienenden Elektrode und dem entsprechenden Bereich des Flüssigkristallmaterials (10) derart verändert ist, und
**dass** die Schichtdicke der Polymerschicht (6) in Bereichen (6a) direkt oberhalb der jeweiligen Elektrode (7) entweder unter Ausbildung von keilförmigen Einbuchtungen (81) keilförmig verläuft, so dass sich im Wesentlichen ein sägezahnförmiger Verlauf quer zur Längsrichtung der Elektroden ergibt, oder
anstelle eines keilförmigen Verlaufs (81) der Schichtdicke ein stufiger Verlauf der Schichtdicke mit mindestens zwei Stufen (81 a) je Pixel vorgesehen ist.

2. Flüssigkristallanzeige nach Anspruch 1, bei der die Pixelelektrode aus einem Material gebildet ist, dessen elektrischer Widerstand höher ist als der elektrische Widerstand des Materials einer elektrischen Zuleitung zur Pixelelektrode, wobei der Spannungsabfall über das höherohmige Material der Pixelelektrode zur Verschiebung der Spannungskennlinie innerhalb eines Pixels führt.

3. Flüssigkristallanzeige nach einem der vorhergehenden Ansprüche, bei der die Dicke der Polymerschicht durch sequentiellen Abtrag der Polymerschicht, insbesondere durch Plasmaätzen, verringert ist, und/oder eine Ultraviolett-Belichtung der Polymerschicht zur Erzielung unterschiedlicher Oberflächenenergien durchgeführt ist.

4. Flüssigkristallanzeige nach einem der vorhergehenden Ansprüche, bei der der elektrische Widerstand in mindestens einem Pixel lokal variiert ist.

5. Flüssigkristallanzeige nach Anspruch 2, bei der die Zuleitung als Zuleitungselektrode dient und mit einer Mehrzahl von Pixelelektroden verbunden ist, wobei das höherohmige Material der Pixelelektrode elektrisch direkt mit der Zuleitungselektrode verbunden ist.

6. Flüssigkristallanzeige nach einem der vorhergehenden Ansprüche, mit mindestens einem der nachfolgenden Merkmale:
die Dicke der Polymerschicht(en) ist durch sequentiellen Abtrag der Polymerschicht verringert,
die Dicke der Polymerschicht(en) ist durch Plasmaätzen verringert,
eine Ultraviolett-Belichtung der Polymerschicht(en) ist zur Erzielung unterschiedlicher Oberflächenenergien durchgeführt,
das Flüssigkristallmaterial ist ein cholesterisches Flüssigkristallmaterial,
die Polymerschichten bestehen aus Polyimid.

7. Verfahren zur Herstellung einer Flüssigkristallzelle, insbesondere für eine Flüssigkristallanzeige nach einem der vorhergehenden Ansprüche, bei dem ein Flüssigkristall (10) zwischen zwei Polymerschichten (4, 6) zur Ausrichtung eines Flüssigkristallmaterials und mehrere Elektroden (7, 7a, 7b, 7c) bereitgestellt werden, wobei wenigstens eine der Polymerschichten (6) eine Schichtdicke zwischen 25nm und 50 nm aufweist und die Oberflächenenergie der wenigstens einen Polymerschicht im Bereich einer oder mehrerer der Elektroden lokal verändert ist, wobei die Dicke der wenigstens einen Polymerschicht im Bereich oberhalb einer Pixelelektrode entweder unter Ausbildung von keilförmigen Einbuchtungen (81) keilförmig, oder aber unter Ausbildung von Stufen (81 a) stufenförmig verändert wird.

8. Verfahren nach Anspruch 7, bei dem zur elektrischen Kontaktierung jeweiliger Pixel eine niederohmige Zuleitung und für mindestens einige der Pixel eine höherohmige Pixelelektrode ausgebildet werden.

9. Verfahren nach einem der Ansprüche 7 oder 8, bei dem ein zweifacher oder mehrfacher Druckprozess zur Ausbildung der Polymerschicht durchgeführt wird.

10. Verfahren nach einem der Ansprüche 7 bis 9, mit mindestens einem der nachfolgenden Merkmale:
die Dicke der Polymerschicht wird durch sequentiellen Abtrag der Polymerschicht verringert,
die Dicke der Polymerschicht wird durch Plasmaätzen verringert,
eine Ultraviolett-Belichtung der Polymerschicht wird zur Erzielung unterschiedlicher Oberflächenenergien durchgeführt,
das Flüssigkristallmaterial ist ein cholesterisches Flüssigkristallmaterial,
die Polymerschicht besteht aus Polyimid.

## Claims

1. Liquid crystal display, having a liquid crystal material (10), which is disposed between two polymer layers (4, 6), and a plurality of electrodes (7, 7a, 7b, 7c), **characterised in that**
the layer thickness of at least one of the polymer layers (4, 6) is in the range between 25 nm and 50 nm,
**in that**, for grey-scale display, the layer thickness of the at least one polymer layer (4, 6), in the region of one or more electrodes, is designed to be different from that of adjacent surface regions,
**in that** the thickness of the at least one polymer layer (4, 6) between an electrode serving as pixel electrode and the corresponding region of the liquid crystal material (10) is changed in such a way, and
**in that** the layer thickness of the polymer layer (6), in regions (6a) directly above the respective electrode (7), extends wedge-shaped either with formation of wedge-shaped indentations (81), so that essentially a saw-tooth course is produced transversely relative to the longitudinal direction of the electrodes, or
instead of a wedge-shaped course (81) of the layer thickness, a graduated course of the layer thickness with at least two graduations (81a) per pixel is provided.

2. Liquid crystal display according to claim 1, in which the pixel electrode is formed from a material, the electrical resistance of which is greater than the electrical resistance of the material of an electrical supply line to the pixel electrode, the voltage drop over the higher-ohmic material of the pixel electrode leading to displacement of the voltage characteristic line within a pixel.

3. Liquid crystal display according to one of the preceding claims, in which the thickness of the polymer layer is reduced by sequential removal of the polymer layer, in particular by plasma etching, and/or ultraviolet exposure of the polymer layer is implemented in order to achieve different surface energies.

4. Liquid crystal display according to one of the preceding claims, in which the electrical resistance is varied locally in at least one pixel.

5. Liquid crystal display according to claim 2, in which the supply line serves as supply electrode and is connected to a plurality of pixel electrodes, the higher-ohmic material of the pixel electrode being connected directly to the supply electrode.

6. Liquid crystal display according to one of the preceding claims, having at least one of the following features:
the thickness of the polymer layer(s) is reduced by sequential removal of the polymer layer,
the thickness of the polymer layer(s) is reduced by plasma etching,
ultraviolet exposure of the polymer layer(s) is implemented in order to achieve different surface energies,
the liquid crystal material is a cholesteric liquid crystal material,
the polymer layers consist of polyimide.

7. Method for the production of a liquid crystal cell, in particular for a liquid crystal display according to one of the preceding claims, in which a liquid crystal (10) is provided between two polymer layers (4, 6) in order to orientate a liquid crystal material and a plurality of electrodes (7, 7a, 7b, 7c), at least one of the polymer layers (4, 6) having a layer thickness between 25 nm and 50 nm and the surface energy of the at least one polymer layer being changed locally in the region of one or more of the electrodes, the thickness of the at least one polymer layer, in the region above a pixel electrode, being wedge-shaped either with formation of wedge-shaped indentations (81) or else being changed gradually with formation of graduations (81a).

8. Method according to claim 7, in which a low-ohmic supply line is formed for electrical contacting of the respective pixels and a higher-ohmic pixel electrode for at least some of the pixels.

9. Method according to one of the claims 7 or 8, in which a double- or multiple printing process is implemented in order to form the polymer layer.

10. Method according to one of the claims 7 to 9, having at least one of the following features:
the thickness of the polymer layer is reduced by sequential removal of the polymer layer,
the thickness of the polymer layer is reduced by plasma etching,
ultraviolet exposure of the polymer layer is implemented in order to achieve different surface energies,
the liquid crystal material is a cholesteric liquid crystal material,
the polymer layer consists of polyimide.

## Revendications

1. Affichage à cristaux liquides, comprenant un matériau à cristaux liquides (10), qui est disposé entre deux couches de polymère (4, 6), et comprenant plusieurs électrodes (7, 7a, 7b, 7c), **caractérisé en ce**
**que** l'épaisseur de couche au moins d'une des couches de polymère (4, 6) est située dans la plage entre 25 nm et 50 nm,
en ce que l'épaisseur de couche de la couche de polymère (4, 6) au moins au nombre de une dans la zone d'une ou de plusieurs électrodes est configurée de manière différente par rapport à celle des zones de surface adjacentes afin de représenter les niveaux de gris,
en ce que l'épaisseur de la couche de polymère (4, 6) au moins au nombre de une entre une électrode faisant office d'électrode de pixel et la zone correspondante du matériau à cristaux liquides (10) est modifiée, et
en ce que soit l'épaisseur de couche de la couche de polymère (6) s'étend de manière cunéiforme dans des zones (6a) directement au-dessus de chaque électrode (7) en formant des indentations cunéiformes (81) de sorte qu'il en résulte essentiellement un profil présentant une forme en dents de scie de manière perpendiculaire par rapport à la direction longitudinale des électrodes, soit
un profil progressif de l'épaisseur de couche est prévu avec au moins deux paliers (81a) par pixel en lieu et place d'un profil cunéiforme (81) de l'épaisseur de couche.

2. Affichage à cristaux liquides selon la revendication 1, dans lequel l'électrode de pixel est formée à partir d'un matériau, dont la résistance électrique est supérieure à la résistance électrique du matériau d'un conducteur d'alimentation électrique menant à l'électrode de pixel, la chute de tension sur le matériau à résistance ohmique élevée de l'électrode de pixel aboutissant à un décalage de la courbe caractéristique de tension à l'intérieur d'un pixel.

3. Affichage à cristaux liquides selon l'une quelconque des revendications précédentes, dans lequel l'épaisseur de la couche de polymère est réduite par un enlèvement séquentiel de matière de la couche de polymère, en particulier par gravure par plasma, et/ou un éclairage ultraviolet de la couche de polymère est effectué afin d'obtenir différentes énergies de surface.

4. Affichage à cristaux liquides selon l'une quelconque des revendications précédentes, dans lequel la résistance électrique varie localement dans au moins un pixel.

5. Affichage à cristaux liquides selon la revendication 2, dans lequel le conducteur d'alimentation fait office d'électrode de conduite d'alimentation et est reliée à une multitude d'électrodes de pixel, le matériau à résistance ohmique élevée de l'électrode de pixel étant relié électriquement directement à l'électrode du conducteur d'alimentation.

6. Affichage à cristaux liquides selon l'une quelconque des revendications précédentes, comprenant au moins une des caractéristiques suivantes :
l'épaisseur de la ou des couches de polymère est réduite par l'enlèvement séquentiel de matière de la couche de polymère,
l'épaisseur de la ou des couches de polymère est réduite par gravure par plasma,
un éclairage ultraviolet de la ou des couches de polymère est effectué afin d'obtenir différentes énergies de surface,
le matériau à cristaux liquides est un matériau à cristaux liquides cholestérique,
les couches de polymère sont constituées d'un polyimide.

7. Procédé servant à fabriquer une cellule à cristaux liquides, en particulier pour un affichage à cristaux liquides selon l'une quelconque des revendications précédentes, dans lequel un cristal liquide (10) est fourni entre deux couches de polymère (4, 6) servant à orienter un matériau à cristaux liquides et plusieurs électrodes (7, 7a, 7b, 7c), au moins une des couches de polymère (6) présentant une épaisseur de couche entre 25 nm et 50 nm et l'énergie de surface de la couche de polymère au moins au nombre de une dans la zone d'une ou de plusieurs des électrodes est localement modifiée, l'épaisseur de la couche de polymère au moins au nombre de une dans la zone au-dessus d'une électrode de pixel étant modifiée soit de manière cunéiforme en formant des indentations cunéiformes (81), soit de manière progressive en formant des paliers (81a).

8. Procédé selon la revendication 7, dans lequel un conducteur d'alimentation à faible résistance ohmique est réalisée aux fins de la mise en contact électrique de pixels respectifs et une électrode de pixel à résistance ohmique élevée est réalisée pour au moins certains des pixels.

9. Procédé selon l'une quelconque des revendications 7 ou 8, dans lequel un double processus d'impression ou un processus d'impression multiple est effectué afin de réaliser la couche de polymère.

10. Procédé selon l'une quelconque des revendications 7 à 9, comprenant au moins une des caractéristiques suivantes :
l'épaisseur de la couche de polymère est réduite par un enlèvement de matière séquentiel de la couche de polymère,
l'épaisseur de la couche de polymère est réduite par gravure par plasma,
un éclairage ultraviolet de la couche de polymère est effectué afin d'obtenir différentes énergies de surface,
le matériau à cristaux liquides est un matériau à cristaux liquides cholestérique,
la couche de polymère est constituée d'un polyimide.
